# FASCICULE DE BREVET EUROPEEN

(11) **EP 3 107 245 B1**
(45) Date de publication et mention de la délivrance du brevet: **02.01.2019**
(21) Numéro de dépôt: 16173850.5
(22) Date de dépôt: 10.06.2016
(51) Int. Cl.: H04L 12/28, H04L 12/10, H02J 3/14, G05B 15/02, H02J 7/34, H02J 7/00, H02J 9/00, H02J 9/06, H02J 13/00

(54) **DISPOSITIF D'ALIMENTATION ET DE TRANSMISSION DE DONNÉES, PROCÉDÉ ET BÂTIMENT ASSOCIÉS**
VORRICHTUNG ZUR STROMVERSORGUNG UND DATENÜBERTRAGUNG, ENTSPRECHENDES VERFAHREN UND ENTSPRECHENDES GEBÄUDE
DEVICE FOR POWER SUPPLY AND DATA TRANSMISSION, ASSOCIATED METHOD AND BUILDING

(30) Priorité: 16.06.2015 FR 1555481
(43) Date de publication de la demande: 21.12.2016
(73) Titulaire: SLAT, 69410 Champagne au Mont d'Or (FR)
(72) Inventeur: BADOIL, Denis, 69210 BULLY (FR); BOCH, Stéphane, 69006 LYON (FR); PASINETTI, Fabrice, 69360 TERNAY (FR)
(74) Mandataire: Cabinet Laurent & Charras

(56) Documents cités:
- WO-A2-2012/106389
- US-A1- 2008 179 956
- US-A1- 2011 266 867
- US-A1- 2015 061 387
- US-A1- 2015 094 968

## Description

### DOMAINE TECHNIQUE

La présente invention concerne le domaine des dispositifs d'alimentation et de transmission de données destinés à alimenter un appareil électrique intégré dans un bâtiment ou dans une agglomération. Ce type d'appareil électrique peut être une caméra, un routeur, un dispositif de contrôle d'accès d'une porte, un système d'alarme, une climatisation...

L'invention concerne également un procédé et un bâtiment comprenant un tel dispositif d'alimentation et de transmission de données.

### ART ANTERIEUR

Il existe des adaptateurs secteur permettant d'alimenter un appareil électrique d'un bâtiment avec une tension continue par adaptation d'une tension alternative du secteur. Ces adaptateurs comportent une entrée de tension alternative connectée à un convertisseur de tension apte à convertir cette tension alternative en une tension continue connectée à une sortie de tension continue. La sortie de tension continue peut ainsi alimenter un appareil électrique d'un bâtiment avec une tension continue prédéterminée, par exemple 12V ou 24V.

Une technologie récente, décrite dans le document US 8,112,641, propose d'utiliser ces adaptateurs pour transmettre la tension continue sur un câble de données. Cette technologie est appelée « POE » (selon l'expression anglo-saxonne « *Power on Ethernet* ») dans la littérature. Ces dispositifs d'alimentation et de transmission de données intègrent un convertisseur de tension et un routeur. Le routeur comporte un premier port connecté à une entrée de données et un second port connecté à une sortie de données, par exemple un connecteur Ethernet. La sortie de données permet de connecter un câble de donnée, par exemple de type « RJ45 », entre un appareil électrique et le dispositif d'alimentation et de transmission de données. Dans cette technologie, deux broches de la sortie de données sont connectées avec la tension continue issue du convertisseur de tension de sorte à transmettre la tension continue par des fils d'un câble de données isolés des deux fils du câble utilisés pour transmettre les données.

Cette technologie permet de faciliter l'installation et la maintenance des appareils électriques d'un bâtiment ou d'une agglomération car ces appareils sont reliés sur un seul câble de données au lieu d'utiliser un câble pour transmettre les données et un câble d'alimentation distinct.

Par ailleurs, il existe un besoin de limiter la consommation électrique d'un bâtiment ou d'une agglomération. Par exemple, certaines normes imposent une limite de consommation des bâtiments à 50 KW/m²/an.

Le problème technique de l'invention consiste à améliorer la gestion énergétique d'un appareil électrique intégré dans un bâtiment ou une agglomération et connecté sur un dispositif d'alimentation et de transmission de données.

### EXPOSE DE L'INVENTION

La présente invention vise à résoudre ce problème en utilisant un système de gestion intégré au dispositif d'alimentation et de transmission de données et connecté sur le routeur.

A cet effet, selon un premier aspect, l'invention concerne un dispositif d'alimentation et de transmission de données destiné à alimenter un appareil électrique intégré dans un bâtiment ou dans une agglomération, le dispositif comportant :
- un convertisseur de tension apte à transformer une tension alternative d'une entrée en une tension continue reliée à une sortie de tension continue,
- un routeur comportant un premier port connecté à une entrée de données et un second port connecté à une sortie de données, et
- un système de gestion comportant :
   ▪ des moyens de mesure de la consommation du convertisseur de tension et de la consommation de la sortie de tension continue, et
   ▪ des moyens de communication connectés à un troisième port du routeur aptes à transmettre les consommations à un dispositif externe.

L'invention permet ainsi de contrôler la consommation énergétique de l'appareil électrique connecté sur le dispositif d'alimentation et de transmission de données. Un dispositif externe peut ainsi centraliser les consommations de tous les appareils électriques d'un bâtiment ou d'une agglomération pour optimiser la consommation d'énergie.

Selon un mode de réalisation, le système de gestion comporte des moyens de commande aptes à interrompre ou mettre en marche le convertisseur de tension, les moyens de communication étant configurés de sorte qu'un dispositif externe puisse dialoguer avec le système de gestion. Ce mode de réalisation permet au dispositif externe d'éteindre les appareils électriques dont la consommation est trop importante par rapport à la nécessité de faire fonctionner l'appareil électrique. Par exemple, le dispositif externe peut décider d'éteindre une climatisation dans une période donnée lorsque la consommation électrique d'un bâtiment est très importante de sorte à réduire la consommation énergétique globale du bâtiment.

Selon un mode de réalisation, le système de gestion est un microcontrôleur.

Selon un mode de réalisation, la sortie de tension continue est intégrée dans la sortie de données de sorte que la tension continue soit transmise entre le dispositif et un appareil électrique sur un fil d'un câble de données non utilisé pour transmettre les données et isolé électriquement des fils du câble utilisés pour transmettre les données. Ce mode de réalisation utilise la technologie POE (Power on Ethernet) permettant de faciliter l'installation et la maintenance des appareils électriques d'un bâtiment ou d'une agglomération car l'appareil est relié sur un seul câble de données au lieu d'utiliser un câble pour transmettre les données et un câble d'alimentation distinct.

Selon un mode de réalisation, le dispositif comporte une deuxième sortie de données connectée à un quatrième port du routeur et une deuxième sortie de tension continue, le système de gestion comportant des moyens de mesure de la consommation de la deuxième sortie de tension continue. Ce mode de réalisation permet de connecter plusieurs appareils électriques sur un seul dispositif d'alimentation et de transmission de données.

Selon un mode de réalisation, le dispositif comporte un élément de stockage d'énergie et un réseau interne de tension continue connecté à l'élément de stockage d'énergie, à la sortie de tension continue et à la tension continue du convertisseur de tension, le système de gestion comportant des moyens de mesure d'un état de charge de l'élément de stockage d'énergie.

Ce mode de réalisation permet de réduire la consommation énergétique en limitant les périodes durant lesquelles le convertisseur de tension fonctionne avec un faible rendement. L'énergie consommée par l'appareil électrique est délivrée soit par le convertisseur de tension, soit par la source de stockage d'énergie. Lorsque le fonctionnement du convertisseur de tension est interrompu, il ne consomme plus d'énergie et l'appareil électrique est alimenté uniquement par la source de stockage d'énergie. Lorsque le fonctionnement du convertisseur de tension est induit, le convertisseur de tension alimente l'appareil électrique et recharge la source de stockage d'énergie. Durant cette phase, le convertisseur de tension fonctionne avec un rendement plus important car il doit délivrer une plus grande quantité d'énergie.

Par exemple, lorsque l'appareil électrique correspond à un dispositif de contrôle d'accès d'une porte par un badge sans contact, le convertisseur de tension d'un dispositif d'alimentation électrique de l'état de la technique fonctionne la plupart du temps avec une faible puissance de sortie (inférieure à 10% de sa puissance nominale) correspondant à un rendement compris entre 60 et 70%. Si la source de stockage d'énergie permet d'alimenter l'appareil électrique la moitié du temps, le convertisseur de tension ne sera utilisé que l'autre moitié du temps d'alimentation de l'appareil électrique. Au cours de cette période, la quantité d'énergie à produire sera de l'ordre de 20% de la puissance nominale du convertisseur. Le rendement du convertisseur de tension sera alors proche de 80%. Sur la durée totale d'alimentation de l'appareil électrique, les besoins en alimentation électriques seront ainsi diminués de 15 à 20%.

Ce mode de réalisation permet également de garantir une capacité minimum de charge dans l'élément de stockage car ce dernier est rechargé par le fonctionnement du convertisseur de tension lorsque la charge de l'élément de stockage est inférieure à une deuxième valeur seuil. Cette capacité minimum permet d'alimenter la charge en cas de coupure de courant au niveau de l'entrée de tension alternative.

En outre, lorsque le dispositif de production d'énergie d'un bâtiment fonctionne, une énergie renouvelable est stockée dans la source de stockage d'énergie du dispositif d'alimentation électrique. Lorsque ce dispositif de production d'énergie ne fonctionne pas, la source de stockage d'énergie peut alimenter l'appareil électrique connecté sur le dispositif d'alimentation électrique sans utiliser une énergie du secteur. L'invention permet ainsi d'améliorer l'autonomie d'un bâtiment ou d'une agglomération.

Avantageusement, le réseau interne de tension continue est connecté à la sortie de tension continue par l'intermédiaire d'un second convertisseur de tension. Ce mode de réalisation permet d'utiliser un élément de stockage d'énergie dont la capacité est particulièrement adaptée aux besoins de stockage d'énergie, et dont la tension de charge et de décharge peut être différente de la tension continue de l'appareil électrique.

Préférentiellement, l'élément de stockage d'énergie est une batterie au lithium. Les dispositifs de stockage des bâtiments, du type onduleur, comportent classiquement des batteries au plomb. Ces batteries présentent une durée de vie de 2 à 3 ans, nécessitant un grand nombre de remplacement au cours de la vie d'un appareil électrique associé. En outre, ces batteries au plomb sont lourdes et encombrantes. Ce mode de réalisation permet d'utiliser des batteries au lithium, dont le poids et l'encombrement sont réduits par rapport aux batteries au plomb. En outre, la durée de vie d'une batterie au lithium est de l'ordre de 10 ans ce qui correspond sensiblement à la durée de vie des appareils électriques connectés sur le dispositif d'alimentation. Pour finir, la batterie au lithium présente également l'avantage de résister davantage aux microcycles de charge et de décharge, c'est-à-dire aux cycles de charge et de décharge incomplets par rapport à la charge et la décharge totale de la batterie.

Préférentiellement, l'élément de stockage d'énergie présente une capacité comprise entre 5 Wh et 5 KWh.

Selon un deuxième aspect, l'invention concerne un procédé de commande d'un dispositif selon le premier aspect, le procédé comportant les étapes suivantes :
- détecter un état de charge de l'élément de stockage d'énergie,
- mesurer la consommation de la sortie de tension continue,
- interrompre le fonctionnement du convertisseur de tension lorsqu'il détecte que la consommation de la sortie de tension continue est inférieure à une première valeur seuil,
- induire le fonctionnement du convertisseur de tension lorsqu'il détecte que la charge de l'élément de stockage d'énergie est inférieure à une deuxième valeur seuil,
- interrompre le fonctionnement du convertisseur de tension lorsqu'il détecte que la charge de l'élément de stockage d'énergie est supérieure à une troisième valeur seuil, et
- interrompre ou induire le fonctionnement du convertisseur de tension en fonction d'un signal externe provenant d'un dispositif externe connecté au routeur.

Selon un troisième aspect, l'invention concerne un bâtiment comportant au moins un dispositif d'alimentation et de transmission de données selon le premier aspect configuré de sorte à maintenir une consommation du bâtiment inférieure à 50 KW/m²/an.

### DESCRIPTION SOMMAIRE DES FIGURES

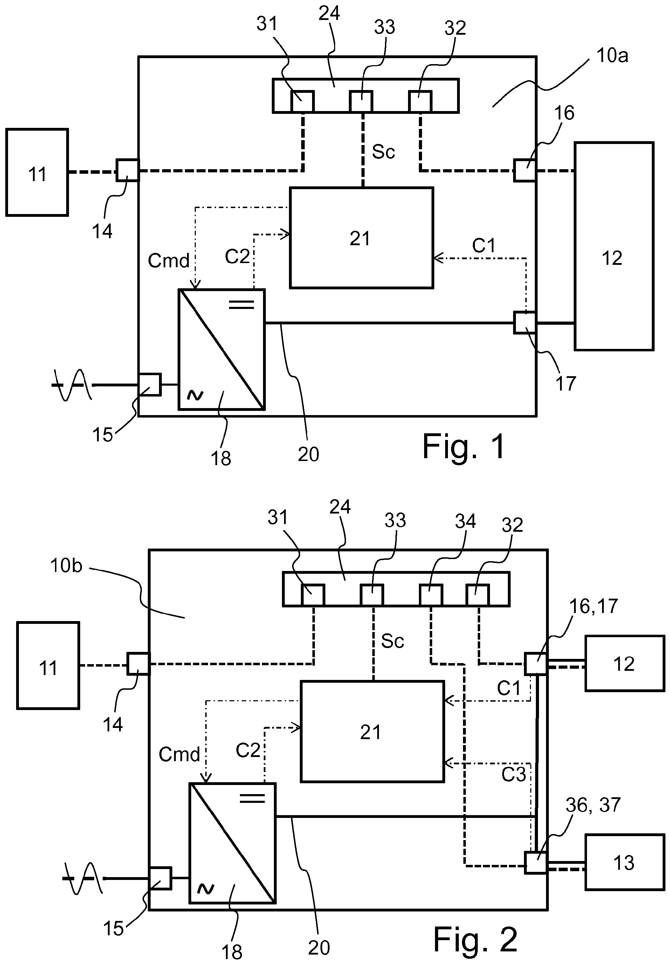

La manière de réaliser l'invention ainsi que les avantages qui en découlent, ressortiront bien du mode de réalisation qui suit, donné à titre indicatif mais non limitatif, à l'appui des figures annexées dans lesquelles les Figures 1 et 2 représentent :
- Figure 1 : une représentation schématique du circuit électrique d'un dispositif d'alimentation et de transmission de données selon un premier mode de réalisation de l'invention ;
- Figure 2 : une représentation schématique du circuit électrique d'un dispositif d'alimentation et de transmission de données selon un deuxième mode de réalisation de l'invention ;
- Figure 3 : une représentation schématique du circuit électrique d'un dispositif d'alimentation et de transmission de données selon un troisième mode de réalisation de l'invention ; et
- Figure 4 : une représentation schématique du circuit électrique d'un dispositif d'alimentation et de transmission de données selon un quatrième mode de réalisation de l'invention ; et
- Figure 5 : une représentation temporelle de l'évolution de l'état de charge de l'élément de stockage d'énergie du dispositif d'alimentation et de transmission de données de la Figure 4.

### DESCRIPTION DETAILLEE DE L'INVENTION

La Figure 1 illustre un dispositif d'alimentation et de transmission de données **10a** connecté à un appareil électrique **12** selon un premier mode de réalisation. Le dispositif **10a** comporte une entrée **15** de tension alternative, connectée à un réseau électrique d'un bâtiment ou d'une agglomération, et une sortie **17** de tension continue connectée à l'appareil électrique **12.** Un convertisseur de tension **18** est connecté à l'entrée **15,** de sorte à transformer la tension alternative de l'entrée **15** en une tension continue **20** connectée à la sortie **17** de tension continue.

Le dispositif **10a** comporte également une entrée **14** de données, connectée à un serveur externe **11,** et une sortie **16** de données connectée à l'appareil électrique **12.** Un routeur **24** comporte un premier port **31** connecté à l'entrée **14** et un deuxième port **32** connecté à la sortie **16,** de sorte à transmettre des données entre le serveur externe **11** et l'appareil électrique **12** telles qu'un flux vidéo lorsque l'appareil électrique **12** est une caméra ou une température de commande lorsque l'appareil électrique **12** est une climatisation.

Un microcontrôleur **21** permet d'informer le serveur externe **11** sur la consommation de l'appareil électrique **12** et du convertisseur de tension **18.** Pour ce faire, le microcontrôleur **21** mesure la consommation **C1** du convertisseur de tension **18** et la consommation de la sortie **17** de tension continue au cours du temps. Ces mesures **C1, C2** sont transmises au serveur externe **11** par un câble réseau reliant le microcontrôleur **21** et un troisième port **33** du routeur **24.** Le serveur externe **11** et le microcontrôleur **21** peuvent ainsi communiquer en utilisant le réseau existant entre l'appareil électrique **12** et le serveur externe **11**. Le routeur **24** permet de répartir correctement les communications entre le serveur externe **11,** l'appareil électrique **12** et le microcontrôleur **21,** par exemple en utilisant des adresses différentes.

De préférence, le microcontrôleur **21** permet également de commander le fonctionnement du convertisseur de tension **18** par l'intermédiaire d'un signal **Cmd.** Le microcontrôleur peut ainsi interrompre ou mettre en marche le convertisseur de tension **18** en fonction d'une commande du dispositif externe **11**.

Le mode de réalisation de la Figure 2 illustre un dispositif d'alimentation et de transmission de données **10b** permettant d'alimenter et de transmettre des données à deux appareils électriques **12, 13.** Pour ce faire, le routeur **24** comporte un quatrième port **34** connecté à une sortie **36** de données reliée avec un deuxième appareil électrique **13.** Le microcontrôleur **21** mesure alors la consommation **C3** d'une sortie **37** de tension continue reliée au deuxième appareil électrique **13.**

La connexion entre les appareils électriques **12, 13** et le dispositif **10b** diffère également du mode de connexion de la Figure 1. Dans le cas de la Figure 1, l'appareil électrique **12** est connecté d'une part sur la sortie **16** de données avec un câble de données et d'autre part sur la sortie **17** de tension continue avec un câble d'alimentation. Dans le cas de la Figure 2, les deux appareils électriques **12, 13** utilisent une connexion de type POE dans laquelle la sortie **17, 37** de tension continue est intégrée dans la sortie **16, 36** de données. Chaque appareil électrique **12, 13** est relié par un seul câble avec le dispositif **10b** et la tension continue est transmise sur un fil du câble non utilisé pour transmettre les données et isolé électrique des fils du câble utilisés pour transmettre les données.

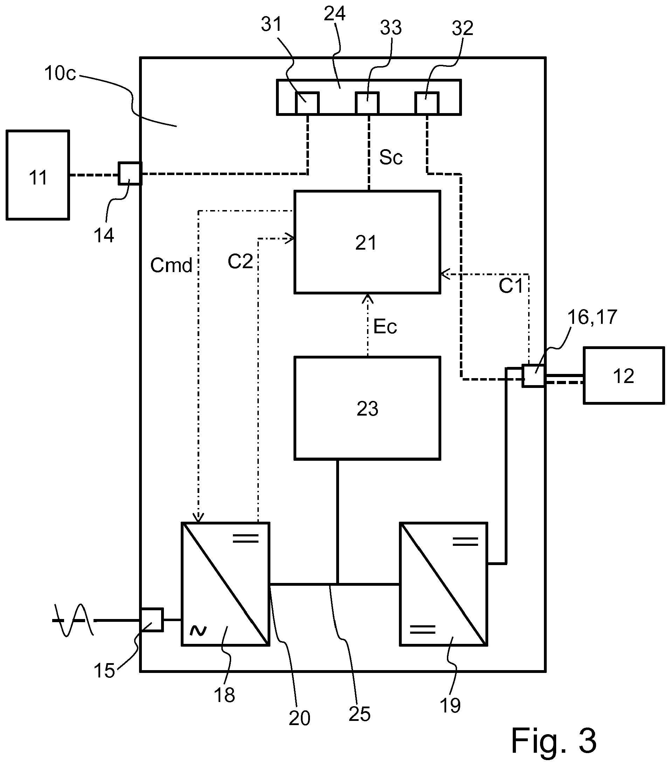

La Figure 3 illustre un troisième mode de réalisation dans lequel un appareil électrique **12** est connecté en POE sur un dispositif d'alimentation et de transmission de données **10c.** En plus des dispositifs **10a, 10b** des modes de réalisation précédents, le dispositif **10c** comporte un élément de stockage d'énergie **23** et un deuxième convertisseur de tension **19.**

Le premier convertisseur de tension **18** est connecté à l'entrée **15,** de sorte à transformer la tension alternative de l'entrée **15** en une tension continue **20.** La tension continue **20** est connectée sur un réseau interne **25** de tension continue. Le réseau interne **25** de tension continue est connecté au deuxième convertisseur de tension **19** qui transforme la tension continue du réseau interne **25** en une tension continue adaptée à l'appareil électrique **12.** La sortie **16** de tension continue est connectée à une sortie du deuxième convertisseur de tension **19.**

Le microcontrôleur **21** mesure un état de la charge **Ec** de l'élément de stockage d'énergie **23** au cours du temps. De préférence, l'élément de stockage d'énergie **23** est une batterie au lithium, dont la capacité est comprise entre 5 Wh et 5 KWh. En fonction de l'état de la charge **Ec** et des consommations **C1-C2,** le microcontrôleur **21** commande le fonctionnement ou l'arrêt du premier convertisseur de tension **18.** A cet effet, le signal **Cmd** permet d'interrompre ou de mettre en marche le premier convertisseur de tension **18.**

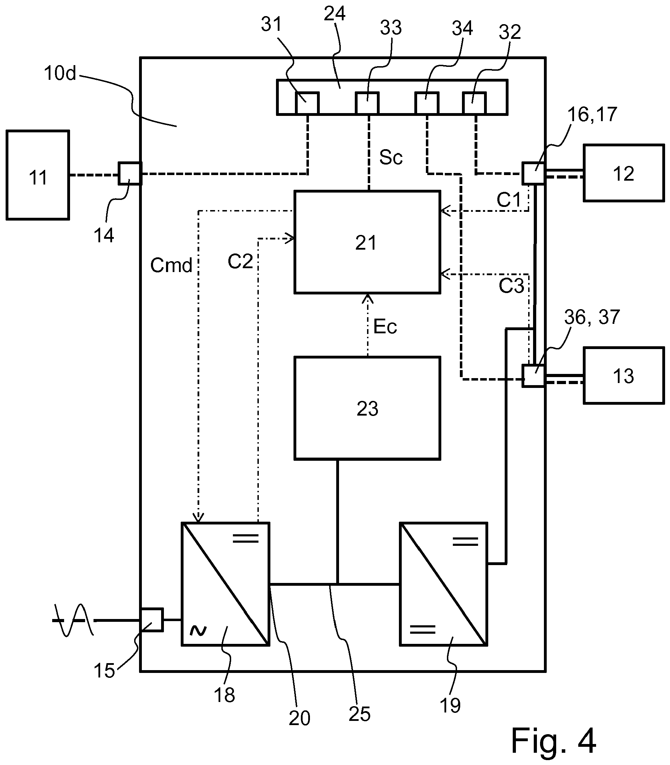

La Figure 4 illustre un quatrième mode de réalisation dans lequel deux appareils électriques **12, 13** sont connecté en POE sur un dispositif d'alimentation et de transmission de données **10d.** En plus du dispositif **10c** du mode de réalisation précédent, le microcontrôleur **21** commande le fonctionnement ou l'arrêt du premier convertisseur de tension **18** en fonction de l'état de la charge **Ec** et des consommations **C1-C3.** L'invention peut ainsi être mise en oeuvre pour plusieurs appareils électriques **12, 13** facilement.

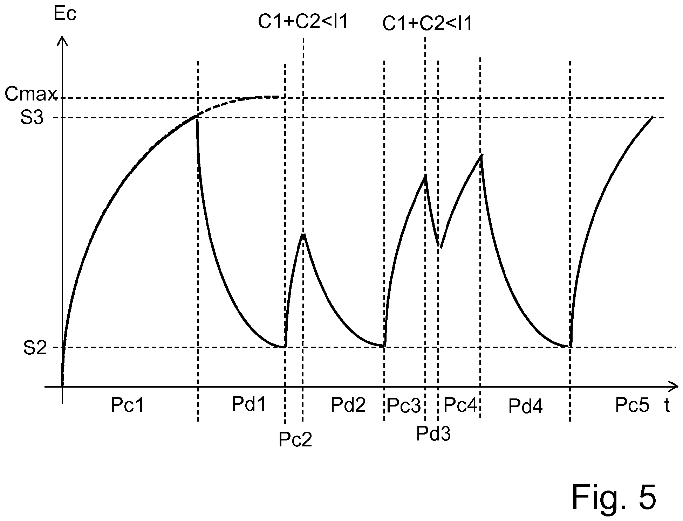

La Figure 5 illustre un exemple de variations de la charge **Ec** de l'élément de stockage **23** en fonction d'un temps effectif d'utilisation du dispositif d'alimentation **10d.**

Dans une première phase **Pcl,** l'élément de stockage **23** est complètement déchargé et le microcontrôleur **21** impose la mise en fonctionnement **Cmd** du premier convertisseur de tension **18.** L'élément de stockage **23** est ainsi chargé par l'énergie alternative provenant de l'entrée **15** et convertie par le premier convertisseur **18.** Lors de cette phase de charge **Pcl,** l'état de charge **Ec** de l'élément de stockage **23** croit de manière logarithmique en direction d'un état de charge maximum **Cmax.** Cette phase de charge **Pc1** est stoppée lorsque le microcontrôleur **21** détecte que la charge **Ec** de l'élément de stockage **23** est supérieure à une valeur seuil **S3.**

Commence alors une première phase de décharge **Pdl,** au cours de laquelle le microcontrôleur **21** interrompt **Cmd** le fonctionnement du premier convertisseur de tension **18.** L'élément de stockage **23** se décharge alors pour combler les besoins en énergie des appareils électriques **12, 13.** Lors de cette phase de décharge **Pdl,** l'état de charge **Ec** de l'élément de stockage **23** décroit de manière logarithmique en direction d'un état de charge **Ec** nul. Cette phase de décharge **Pd1** est stoppée lorsque le microcontrôleur **21** détecte que la charge **Ec** de l'élément de stockage **23** est inférieure à une valeur seuil **S2.** Les phases de charge **Pcl-Pc5** et de décharge **Pd1-Pd4** s'alternent ainsi pendant toute la durée de vie du dispositif d'alimentation **10d.**

Certains évènements externes peuvent modifier cette alternance de phases de charge **Pcl-Pc5** et de décharge **Pdl-Pd4.** Par exemple, le serveur externe **11** peut commander le fonctionnement du convertisseur de tension **18** en fonction des besoins du bâtiment ou de l'agglomération.

Pour un exemple illustré sur la figure 5, au cours des phases de charge **Pc2** et **Pc3,** le microcontrôleur **21** détecte que la somme des consommations **C1+C2** est inférieure à une valeur seuil **I1,** le rendement du convertisseur de tension **18** est donc particulièrement faible. Suite à cette information, les phases de charge **Pc2** et **Pc3** sont stoppées pour entamer une phase de décharge **Pd2, Pd3** au cours desquelles l'élément de stockage d'énergie **23** alimente les appareils électriques **12, 13.**

Pour un autre exemple illustré sur la figure 5, au cours de la phase de décharge **Pd3,** le serveur externe **11** détecte que la météo va bientôt changer et que le dispositif de production d'énergie renouvelable du bâtiment va devenir inopérant. Suite à cette information, le serveur externe **11** commande le microcontrôleur **21** et la phase de décharge **Pd3** est stoppée pour entamer une phase de charge **Pc4,** alors que le dispositif de production d'énergie renouvelable du bâtiment est toujours opérationnel. Lorsque les conditions climatiques sont telles que le dispositif de production d'énergie renouvelable du bâtiment est inopérant, la phase de charge **Pc4** est stoppée pour privilégier la consommation de l'élément de stockage **23** au cours d'une phase de décharge **Pd4.**

En variante, l'invention peut être appliquée pour alimenter et transmettre des données à plus de deux appareils électriques **12, 13** en augmentant la taille du routeur **24** et le nombre de sorties **16, 17.** De plus, chaque appareil électrique **12, 13** peut être connecté avec le dispositif **10a-10d** soit au moyen d'une connexion de type POE ou d'une connexion classique intégrant un câble de données et un câble d'alimentation.

L'invention permet ainsi de connaître la consommation **C1-C3** des appareils électriques **12, 13** intégrés dans un bâtiment ou dans une agglomération. L'invention permet de paramétrer un grand nombre de scénarios afin de réduire la consommation énergétique d'un bâtiment ou d'une agglomération. En outre, l'invention permet la mise en oeuvre d'un bâtiment particulièrement performant dont la consommation est contrôlée pour ne pas dépasser 50 KW/m²/an.

## Revendications

1. Dispositif d'alimentation et de transmission de données (10a-10d) destiné à alimenter un appareil électrique (12, 13) intégré dans un bâtiment ou dans une agglomération, le dispositif (10a-10d) comportant :
- un convertisseur de tension (18) apte à transformer une tension alternative d'une entrée (15) en une tension continue (20) reliée à une sortie (17) de tension continue, et
- un routeur (24) comportant un premier port (31) connecté à une entrée (14) de données et un second port (32) connecté à une sortie (16) de données,
***caractérisé* en ce que** le dispositif (10a-10d) comporte en outre un système de gestion (21) comportant :
- des moyens de mesure de la consommation (C1) du convertisseur de tension (18) et de la consommation (C2) de la sortie (17) de tension continue, et
- des moyens de communication connectés à un troisième port (33) du routeur (24) aptes à transmettre les consommations (C1, C2) à un dispositif externe (11).

2. Dispositif d'alimentation et de transmission de données selon la revendication 1, ***caractérisé* en ce que** le système de gestion (21) comporte des moyens de commande aptes à interrompre ou mettre en marche le convertisseur de tension (18), les moyens de communication étant configurés de sorte qu'un dispositif externe (11) puisse dialoguer avec le système de gestion.

3. Dispositif d'alimentation et de transmission de données selon la revendication 1 ou 2, ***caractérisé* en ce que** le système de gestion (21) est un microcontrôleur.

4. Dispositif d'alimentation et de transmission de données selon l'une des revendications 1 à 3, ***caractérisé* en ce que** la sortie (17) de tension continue est intégrée dans la sortie (16) de données de sorte que la tension continue soit transmise entre le dispositif (10a-10d) et un appareil électrique (12, 13) sur un fil d'un câble de données non utilisé pour transmettre les données et isolé électriquement des fils du câble utilisés pour transmettre les données.

5. Dispositif d'alimentation et de transmission de données selon l'une des revendications 1 à 4, ***caractérisé* en ce qu'**il comporte une deuxième sortie (36) de données connectée à un quatrième port (34) du routeur (24) et une deuxième sortie (37) de tension continue, le système de gestion (21) comportant des moyens de mesure de la consommation (C3) de la deuxième sortie (37) de tension continue.

6. Dispositif d'alimentation et de transmission de données selon l'une des revendications 1 à 5, ***caractérisé* en ce qu'**il comporte un élément de stockage d'énergie (23) et un réseau interne (25) de tension continue connecté à l'élément de stockage d'énergie (23), à la sortie (17) de tension continue et à la tension continue (20) du convertisseur de tension (18), le système de gestion (21) comportant des moyens de mesure d'un état de charge (Ec) de l'élément de stockage d'énergie (23).

7. Dispositif d'alimentation et de transmission de données selon la revendication 6, ***caractérisé* en ce que** le réseau interne (25) de tension continue est connecté à la sortie (17) de tension continue par l'intermédiaire d'un second convertisseur de tension (19).

8. Dispositif d'alimentation et de transmission de données selon la revendication 6 ou 7, ***caractérisé* en ce que** l'élément de stockage d'énergie (23) est une batterie au lithium.

9. Dispositif d'alimentation et de transmission de données selon l'une des revendications 6 à 8, ***caractérisé* en ce que** l'élément de stockage d'énergie (23) présente une capacité comprise entre 5 Wh et 5 KWh.

10. Procédé de commande d'un dispositif selon l'une des revendications 6 à 9, ***caractérisé* en ce qu'**il comporte les étapes suivantes :
- détecter un état de charge (Ec) de l'élément de stockage d'énergie (23),
- mesurer la consommation (C1, C3) de la sortie (17) de tension continue,
- interrompre le fonctionnement du convertisseur de tension (18) lorsqu'il détecte que la consommation (C1, C3) de la sortie (17) de tension continue est inférieure à une première valeur seuil (I1),
- induire le fonctionnement du convertisseur de tension (18) lorsqu'il détecte que la charge (Ec) de l'élément de stockage d'énergie (23) est inférieure à une deuxième valeur seuil (S2),
- interrompre le fonctionnement du convertisseur de tension (18) lorsqu'il détecte que la charge (Ec) de l'élément de stockage d'énergie (23) est supérieure à une troisième valeur seuil (S3), et
- interrompre ou induire le fonctionnement du convertisseur de tension (18) en fonction d'un signal (Sc) externe provenant d'un dispositif externe (11) connecté au routeur (24).

11. Bâtiment comportant un dispositif d'alimentation et de transmission de données (10a-10d) selon l'une des revendications 1 à 9 configuré de sorte à maintenir une consommation du bâtiment inférieure à 50 KW/m²/an.

## Patentansprüche

1. Vorrichtung zur Stromversorgung und Datenübertragung (10a-10d) zur Versorgung eines in einem Gebäude oder in einer Siedlung integrierten Elektrogeräts (12, 13), wobei die Vorrichtung (10a-10d) umfasst:
- einen Spannungswandler (18), der zum Umwandeln einer Wechselspannung von einem Eingang (15) in eine Gleichspannung (20) geeignet ist, die an einen Gleichspannungsausgang (17) angeschlossen ist, und
- einen Router (24) mit einem ersten Port (31), der mit einem Dateneingang (14) verbunden ist, und mit einem zweiten Port (32), der mit einem Datenausgang (16) verbunden ist,
**dadurch gekennzeichnet, dass** die Vorrichtung (10a-10d) außerdem ein Verwaltungssystem (21) enthält, das wieder folgende Elemente umfasst:
- Mittel zum Messen des Verbrauchs (C1) des Spannungswandlers (18) und des Verbrauchs (C2) des Gleichspannungsausgangs (17) und
- Kommunikationsmittel, die mit einem dritten Port (33) des Routers (24) verbunden sind und die die Verbrauchswerte (C1, C2) an ein externes Gerät (11) übertragen können.

2. Vorrichtung zur Stromversorgung und Datenübertragung gemäß Anspruch 1, **dadurch gekennzeichnet, dass** das Verwaltungssystem (21) Steuervorrichtungen umfasst, die in der Lage sind, den Spannungswandler (18) zu unterbrechen oder einzuschalten, wobei die Kommunikationsmittel so konfiguriert sind, dass ein externes Gerät (11) mit dem Verwaltungssystem kommunizieren kann.

3. Vorrichtung zur Stromversorgung und Datenübertragung gemäß Anspruch 1 oder 2, **dadurch gekennzeichnet, dass** das Verwaltungssystem (21) ein Mikrocontroller ist.

4. Vorrichtung zur Stromversorgung und Datenübertragung gemäß einem der Ansprüche 1 bis 3, **dadurch gekennzeichnet, dass** der Gleichspannungsausgang (17) in den Datenausgang (16) integriert ist, so dass die Gleichspannung zwischen der Vorrichtung (10a-10d) und einem Elektrogerät (12, 13) über eine Datenkabelleitung übertragen wird, die nicht zur Datenübertragung genutzt wird und elektrisch von den zur Datenübertragung genutzten Leitungskabeln isoliert ist.

5. Vorrichtung zur Stromversorgung und Datenübertragung gemäß einem der Ansprüche 1 bis 4, **dadurch gekennzeichnet, dass** sie einen zweiten Datenausgang (36), der mit einem vierten Port (34) des Routers (24) verbunden ist und einen zweiten Gleichspannungsausgang (37) enthält, wobei das Verwaltungssystem (21) Mittel zur Messung des Verbrauchs (C3) am zweiten Gleichspannungsausgang (37) umfasst.

6. Vorrichtung zur Stromversorgung und Datenübertragung gemäß einem der Ansprüche 1 bis 5, **dadurch gekennzeichnet, dass** es ein Energiespeicherelement (23) und ein internes Gleichspannungsnetz (25) enthält, das mit dem Energiespeicherelement (23), dem Gleichspannungsausgang (17) und der Gleichspannung (20) des Spannungswandlers (18) verbunden ist, wobei das Verwaltungssystem (21) Mittel zur Messung eines Ladestatus (Ec) des Energiespeicherelementes (23) umfasst.

7. Vorrichtung zur Stromversorgung und Datenübertragung gemäß einem der Anspruch 6, **dadurch gekennzeichnet, dass** das interne Gleichspannungsnetz (25) mit dem Gleichspannungsausgang (17) über einen zweiten Spannungswandler (19) verbunden ist.

8. Vorrichtung zur Stromversorgung und Datenübertragung gemäß Anspruch 6 oder 7, **dadurch gekennzeichnet, dass** das Stromspeicherelement (23) eine Lithiumbatterie ist.

9. Vorrichtung zur Stromversorgung und Datenübertragung gemäß einem der Ansprüche 6 bis 8, **dadurch gekennzeichnet, dass** das Stromspeicherelement (23) eine Kapazität zwischen 5 Wh und 5 KWh aufweist.

10. Verfahren gemäß einem der Ansprüche 6 bis 9, **dadurch gekennzeichnet, dass** es die folgenden Schritte umfasst:
- Erkennen eines Ladestatus (Ec) des Energiespeicherelementes (23),
- Messung des Verbrauchs (C1, C3) des Gleichspannungsausgangs (17),
- Unterbrechen des Betriebs des Spannungswandlers (18), wenn festgestellt wird, dass der Verbrauch (C1, C3) des Gleichspannungsausgangs (17) unter einem ersten Schwellenwert (11) liegt,
- Induzieren des Betriebs des Spannungswandlers (18), wenn es erkennt, dass die Ladung (Ec) des Stromspeicherelementes (23) unter einem zweiten Schwellenwert (S2) liegt,
- Unterbrechen des Betriebs des Spannungswandlers (18), wenn es erkennt, dass die Ladung (Ec) des Stromspeicherelementes (23) unter einem dritten Schwellenwert (S3) liegt, und
- Unterbrechen oder Induzieren des Betriebs des Spannungswandlers (18) in Abhängigkeit von einem externen Signal (Sc), das von einem externen Gerät (11) stammt, das mit dem Router (24) verbunden ist.

11. Gebäude mit einer Stromversorgungseinrichtung (10a-10d) gemäß einem der Ansprüche 1 bis 9, das so konfiguriert ist, dass der Verbrauch des Gebäudes unter 50 KW/m²/ Jahr liegt.

## Claims

1. Device for power supply and data transmission (10a-10d) designed to power an electrical appliance (12, 13) incorporated into a building or into an urban conglomeration, with the said device (10a-10d) incorporating:
• a voltage converter (18) capable of converting an alternating-current voltage of an input (15) into a direct-current voltage (20) connected to a direct-current output (17), and
• a router (24) incorporating one first port (31) connected to a data input (14) and one second port (32) connected to a data output (16),
**characterized by** the fact that the device (10a-10d) also includes a management system (21) incorporating:
• a means of measurement of the consumption (C1) of the voltage converter (18) and of the consumption (C2) of the direct-current output (17), and
• a means of communication connected to a third port (33) of the router (24), able to transmit the consumptions (C1, C2) to an external device (11).

2. Device for power supply and data transmission in accordance with claim 1, **characterized by** the fact that the management system (21) incorporates a means of control able to switch off or switch on the voltage converter (18), with the means of communication being configured so that an external device (11) can interact with the management system.

3. Device for power supply and data transmission in accordance with claim 1 or claim 2, **characterized by** the fact that the management system (21) is a microcontroller.

4. Device for power supply and data transmission in accordance with one of claims 1 to 3, **characterized by** the fact that the direct-current output (17) is incorporated into the data output (16) so that the direct-current voltage is transmitted between the device (10a-10d) and an electrical appliance (12, 13) over a wire of a data cable not used for transmitting the data, that is electrically insulated from the wires of the cable used for transmitting data.

5. Device for power supply and data transmission in accordance with one of claims 1 to 4, **characterized by** the fact that it incorporates a second data output (36) connected to a fourth port (34) of the router (24), and a second direct-current output (37), with the management system (21) incorporating a means of measurement of the consumption (C3) of the second direct-current output (37).

6. Device for power supply and data transmission in accordance with one of claims 1 to 5, **characterized by** the fact that it incorporates an energy storage system (23) and in internal direct-current network (25) connected to the energy storage system (23), to the direct-current output (17), and to the direct-current voltage (20) of the voltage converter (18), with the management system (21) incorporating a means of measurement of a charge status (Ec) of the energy storage system.

7. Device for power supply and data transmission in accordance with claim 6, **characterized by** the fact that the internal direct-current network (25) is connected to the direct-current output (17) by means of a second voltage converter (19).

8. Device for power supply and data transmission in accordance with claim 6 or claim 7, **characterized by** the fact that the energy storage system (23) is a lithium ion battery.

9. Device for power supply and data transmission in accordance with one of claims 6 to 8, **characterized by** the fact that the energy storage system (23) has a capacity of between 5 Wh and 5 KWh.

10. Process for controlling a device in accordance with one of claims 6 to 9, **characterized by** the fact that it includes the following steps:
• detect a charge status (Ec) of the energy storage system (23);
• measure the consumption (C1, C3) of the direct-current output (17);
• halt the operation of the voltage converter (18) when it detects that the consumption (C1, C3) of the direct-current output (17) is lower than a first threshold value (11);
• trigger the operation of the voltage converter (18) when it detects that the charge (Ec) of the energy storage system (23) is lower than a second threshold value (S2);
• halt the operation of the voltage converter (18) when it detects that the charge (Ec) of the energy storage system (23) is higher than a third threshold value (S3); and
• halt or trigger the operation of the voltage converter (18) according to an external signal (Sc) coming from an external device (11) connected to the router (24).

11. Building incorporating a device for power supply and data transmission (10a-10d) in accordance with one of claims 1 to 9, configured to maintain a consumption of the building below 50 KW per square meter per year.
